# EUROPEAN PATENT SPECIFICATION

(11) **EP 2 604 725 B1**
(45) Date of publication and mention of the grant of the patent: **13.08.2014**
(21) Application number: 12196870.5
(22) Date of filing: 13.12.2012
(51) Int. Cl.: C23G 1/36, C23G 1/10, C25C 1/12

(54) **Method of removing oxide film on surface of copper or copper-base alloy.**
Verfahren zum Entfernen eines Oxidfilms auf einer Oberfläche aus Kupfer oder Legierung auf Kupferbasis.
Procédé permettant d'éliminer un film d'oxyde sur une surface de cuivre ou d'alliage à base de cuivre.

(30) Priority: 15.12.2011 JP 2011274719; 24.02.2012 JP 2012039190; 24.04.2012 JP 2012099274
(43) Date of publication of application: 19.06.2013
(73) Proprietor: Mitsubishi Materials Corporation, Chiyoda-ku Tokyo 100-8117 (JP)
(72) Inventor: KUMAGAI, Jyunichi, Aizuwakamatsu-shi,, Fukushima 965-8522 (JP); TARUTANI, Yoshie, Aizuwakamatsu-shi,, Fukushima 965-8522 (JP); NAKAYAMA, Hiroaki, Sakai-shi,, Osaka 8-374 (JP); OKADA, Kenzi, Sakai-shi,, Osaka 8-374 (JP); KATO, Naoki, Naka-shi,, Ibaraki 311-0102 (JP); KUBOTA, Kenji, Naka-shi,, Ibaraki 311-0102 (JP)
(74) Representative: Gille Hrabal

(56) References cited:
- WO-A1-98/15674
- DE-A1- 10 326 767
- DE-A1- 19 506 832
- DE-A1- 19 758 072
- DE-A1- 19 850 530

## Description

### BACKGROUND OF THE INVENTION

### Field of the Invention

The present invention relates to a method of removing oxide film on a surface of a copper or copper-base alloy and more specifically relates to a method of removing oxide film on a surface of a copper or copper-base alloy in which a copper or copper-base alloy, having oxide film formed on a surface thereof, is dipped in a pickling bath to remove the oxide film; and a pickling solution containing the oxide film is electrolyzed in an electrolytic bath so as to recover a high-purity copper or copper-base alloy having superior handleability and to return the electrolyzed pickling solution to the pickling bath for reuse.

Priority is claimed on Japanese Patent Application No. 2011-274719 filed on December 15, 2011, Japanese Patent Application No. 2012-039190 filed on February 24, 2012, and Japanese Patent Application No. 2012-099274 filed on April 24, 2012, the contents of which are incorporated herein by reference.

### Description of Related Art

For example, a copper or copper-base alloy, which is subjected to heat treatment such as hot rolling or hot extrusion, is normally pickled or etched in order to remove oxide film or fine defects formed on a surface thereof. As a pickling solution or an etchant, sulfuric acid, a sulfuric acid-based acid obtained by mixing hydrogen peroxide with sulfuric acid, hydrochloric acid, and nitric acid are used. In some cases, additives such as hydrofluoric acid and another surfactant may also be used as a pickling solution or an etchant. Recently, from the viewpoints of resource recovery and effluent treatment problems, it has been widely attempted to recover copper oxide or metallic copper, which is dissolved in a pickling solution or an etchant after the treatment, with an electrolytic method and to reuse a used pickling solution or etchant.

Japanese Examined Patent Application, Second Publication No. S61-60148 discloses a method of recycling and recovering nitric acid and metallic copper powder through electrolysis from a waste solution containing copper and nitric acid, which is generated in the finishing process of pickling copper. In this method, in a device in which at least an anode of two electrodes is a ferrite electrode; and an anode region, an intermediate region, and a cathode region are formed between the anode and a cathode with a combination of an anionic membrane and a cationic membrane or with a combination of plural amphoteric membranes, the waste solution containing copper and nitric acid, which is generated in the process of pickling a product formed from a copper or copper-base alloy, is electrolyzed while maintaining the pH value of the cathode region in a range of 0.5 to 2.0, thereby recovering nitric acid in the anode region and copper powder in the cathode region.

Japanese Unexamined Patent Application, First Publication No. 2003-342763 discloses a method of efficiently removing tin, efficiently recovering copper in a treatment solution, and reusing sulfuric acid after treatment without generating fine solid materials, such as tin oxide and hydroxide, which cause problems when a waste solution after pickling the copper-base alloy is reused. This method is a method of recycling the waste solution after pickling the copper-base alloy in which the waste solution is heated at 40°C or higher to selectively separate tin by precipitation as a pretreatment for recycling.

Further methods for the treatment of the surfaces of copper or copper alloys are described in DE 103 26 767 A1, DE 195 06 832 A1, DE 197 58 072 A1 and DE 198 50 530 A1. Stable acidic solutions for such treatments are described in WO 98/15674 A1.

### SUMMARY OF THE INVENTION

### Problems to be Solved by the Invention

In a method of removing oxide film formed on a surface of a copper or copper-base alloy of the related art, after oxide film is removed in a pickling bath, it is difficult to electrolyze a pickling solution containing the oxide film in an electrolytic bath and efficiently recover a high-purity copper or copper-base alloy capable of being reused as a recycled material having superior handleability, and furthermore it is also difficult to return the electrolyzed pickling solution to the pickling bath for reuse.

### Means for Solving the Problem

According to the present invention, there is provided a method of removing oxide film on a surface of a copper or copper-base alloy, in which the above-described problems can be solved; and after the copper or copper-base alloy having oxide film formed on a surface thereof is dipped in a pickling bath to remove the oxide film, a pickling solution containing the oxide film is electrolyzed in an electrolytic bath so as to efficiently recover a high-purity copper or copper-base alloy, capable of being reused as a recycled material having superior handleability, and furthermore to return the electrolyzed pickling solution to the pickling bath for reuse.

As a result of thorough investigation in consideration of such circumstances, the present inventors found that oxide film can be efficiently removed by using a pickling solution including 50 g/L to 400 g/L of sulfuric acid, 1 g/L to 100 g/L of at least one oxidant selected from a group consisting of nitric acid, hydrogen peroxide, peroxodisulfate ions, and iron (III) ions, 0.01 g/L to 10 g/L of at least one additive selected from a group consisting of aromatic sulfonic acid, aromatic sulfonate, alkylamine, aromatic carboxylic acid, and aromatic carboxylate, 0.005 g/L to 10 g/L of at least one surfactant selected from a group consisting of alkylbenzene sulfonic acid and alkylbenzene sulfonate, and 10 g/L to 300 g/L of copper sulfate; and a high-purity copper or copper-base alloy, capable of being reused as a recycled material having superior handleability, can be recovered by electrolyzing a pickling solution containing the removed oxide film in an electrolytic bath.

Furthermore, the present inventors found that a pickling solution can be efficiently reused by adding the oxidant, the additive, and the surfactant to the electrolyzed pickling solution in amounts equivalent to those consumed when the oxide film is removed and when the electrolysis is performed.

That is, according to the present invention, there is provided a method of removing oxide film formed on a surface of a copper or copper-base alloy, the method including steps of: dipping the copper or copper-base alloy having oxide film formed on a surface thereof, to remove the oxide film, in a pickling bath which contains a pickling solution including 50 g/L to 400 g/L of sulfuric acid, 1 g/L to 100 g/L of at least one oxidant selected from a group consisting of nitric acid, hydrogen peroxide, peroxodisulfate ions, and iron (III) ions, 0.01 g/L to 10 g/L of at least one additive selected from a group consisting of aromatic sulfonic acid, aromatic sulfonate, alkylamine, aromatic carboxylic acid, and aromatic carboxylate, 0.005 g/L to 10 g/L of at least one surfactant selected from a group consisting of alkylbenzene sulfonic acid and alkylbenzene sulfonate, and 10 g/L to 300 g/L of copper sulfate; electrolyzing the pickling solution containing the removed oxide film in an electrolytic bath so as to recover the copper or copper-base alloy from the oxide film; adding the oxidant, the additive, and the surfactant to the electrolyzed pickling solution in amounts equivalent to those consumed when the oxide film is removed and when the electrolysis is performed; and returning the electrolyzed pickling solution, to which the oxidant, the additive, and the surfactant are added, to the pickling bath to be reused as a new pickling solution.

When the amount of the sulfuric acid is less than 50 g/L, an effect of removing oxide film deteriorates, and when the amount of the sulfuric acid is greater than 400 g/L, the effect is saturated and the cost is wasted.

When the amount of at least one oxidant selected from a group consisting of nitric acid, hydrogen peroxide, peroxodisulfate ions, and iron (III) ions is less than 1 g/L, an effect of removing oxide film deteriorates, and when the amount of the oxidant is greater than 100 g/L, the amount of gas generated during removal increases, which is disadvantageous. The generated gas is mainly NO_{X} and oxygen gas generated by the oxidant used.

Even when a treatment oil, which is attached onto a surface of the copper or copper-base alloy and is introduced in the previous step, contaminates a pickling solution, at least one additive selected from a group consisting of aromatic sulfonic acid, aromatic sulfonate, alkylamine, aromatic carboxylic acid, and aromatic carboxylate deposits a high-purity copper or copper-base alloy, capable of being used as a recycled material having superior handleability, on a cathode during the electrolysis and prevents the reductive degradation of hydrogen peroxide on the cathode. In addition, the additive works as a stabilizer for the oxidant in the pickling solution and thus also serves to suppress the consumption of the oxidant. When the addition amount thereof is less than 0.01 g/L or greater than 10 g/L, the effect cannot be obtained.

At least one surfactant selected from a group consisting of alkylbenzene sulfonic acid and alkylbenzene sulfonate is chemically stable in the pickling solution, lowers the surface tension of the pickling solution for a long period of time to prevent dispersion of mist, and increases the osmotic strength of the pickling solution to enhance pickling capability. In particular, the additive can prevent a large amount of sulfuric acid mist from being dispersed by oxygen gas which is generated from a cathode during the electrolysis. When the addition amount thereof is less than 0.005 g/L or greater than 10 g/L, the above-described effect cannot be obtained.

Advantageous effects of the present invention can be obtained with a combination of at least one additive selected from a group consisting of aromatic sulfonic acid, aromatic sulfonate, alkylamine, aromatic carboxylic acid, and aromatic carboxylate and at least one surfactant selected from a group consisting of alkylbenzene sulfonic acid and alkylbenzene sulfonate.

When the amount of the copper sulfate is less than 10 g/L, the efficiency of the electrolysis in the next step decreases. When the amount of the copper sulfate is greater than 300 g/L, the amount approaches saturated solubility and thus unnecessary copper sulfate is deposited in the pickling solution.

By adding the oxidant, the additive, and the surfactant to the electrolyzed pickling solution in amounts equivalent to those consumed when the oxide film is removed and when the electrolysis is performed and returning the electrolyzed pickling solution, to which the oxidant, the additive, and the surfactant are added, to the pickling bath, the pickling solution can be efficiently reused as a new pickling solution. As a result, oxide film on a surface of the copper or copper-base alloy can be removed not only in a batch treatment but in a continuous treatment. The amounts of the oxidant, the additive, and the surfactant added (consumed) vary depending on the kind of the copper or copper-base alloy, but are about 0.5% to 10% of the initial amounts.

In the method of removing oxide film on a surface of a copper or copper-base alloy according to the present invention, it is preferable that a surface tension of the pickling solution be less than or equal to 50 × 10⁻³ N/m.

The surface tension of the pickling solution is adjusted to be less than or equal to 50 x 10⁻³ N/m (50 dyn/cm) mainly by at least one surfactant selected from a group consisting of alkylbenzene sulfonic acid and alkylbenzene sulfonate. As a result, a large amount of sulfuric acid mist can be efficiently prevented from being dispersed by oxygen gas which is generated from a cathode during the electrolysis and a high-purity copper or copper-base alloy, capable of being used as a recycled material having superior handleability, can be further efficiently recovered.

In the method of removing oxide film on a surface of a copper or copper-base alloy according to the present invention, it is preferable that the method further have steps of: in the electrolyzing step, adjusting a concentration of copper ions in the pickling solution containing the removed oxide film is 20 g/L to 60 g/L; controlling a current density in a range of 1 A/dm² to 25 A/dm²; and rotating a cathode having a cylindrical body at a peripheral speed in a range of 0.08 m/s to 0.48 m/s.

The efficiency of the electrolysis can be increased to a large degree and the size of the electrolytic bath can be reduced by setting the concentration of copper ions in the pickling solution containing the removed oxide film to be 20 g/L to 60 g/L, the current density to be 1 A/dm² to 25 A/dm², the cathode to be a rotating cylindrical body, and the peripheral speed of the rotating cylindrical body to be 0.08 m/s to 0.48 m/s.

If the concentration of copper ions, the current density, and the peripheral speed of the rotating cathode do not fall within the above-described range, the efficiency of the electrolysis does not increase to a large degree.

In addition, in the method of removing oxide film on a surface of a copper or copper-base alloy according to the present invention, it is preferable that in the electrolyzing, the flow rate of a pickling solution supplied to the electrolytic bath and the current density in the electrolytic bath be adjusted such that the concentration of copper ions in the pickling solution containing the removed oxide film is 20 g/L to 60 g/L.

When the removal method according to the present invention is performed in a continuous treatment, there are many cases where the amounts of the copper or copper-base alloy having oxide film formed on a surface thereof, which is to be dipped in the pickling bath, or the characteristics of the oxide film are uneven and different. As a result, the concentration of copper ions in the pickling solution containing the removed oxide film does not fall within the range of 20 g/L to 60 g/L and the electrolysis is not stably performed in the electrolytic bath, which may adversely affect the stable recovery of the copper or copper-base alloy.

Therefore, when the concentration of copper ions in the pickling solution is greater than 60 g/L, the recovery of the copper or copper-base alloy temporarily increases and the concentration of copper ions in the pickling solution is adjusted to be less than or equal to 60 g/L by increasing the amount of a pickling solution, which is supplied to the electrolytic bath, to increase the flow rate of the pickling solution to the electrolytic bath and increasing a current, which is applied to the electrolytic bath, to increase the current density in the electrolytic bath. When the concentration of copper ions in the pickling solution is less than 20 g/L, the recovery of the copper or copper-base alloy temporarily deteriorates and the concentration of copper ions in the pickling solution is adjusted to be greater than or equal to 20 g/L by reducing the amount of a pickling solution, which is supplied to the electrolytic bath, to reduce the flow rate of the pickling solution to the electrolytic bath and reducing a current, which is applied to the electrolytic bath, to reduce the current density in the electrolytic bath. Through this operation, stable electrolysis can be continuously performed in the electrolytic bath. In this case, when only the current density is changed, the precipitation state of the copper or copper-base alloy recovered easily changes. Therefore, the flow rate is also changed at the same time to control the thickness of a diffusion layer in the pickling solution, thereby promoting stable electrolysis without changing the precipitation state of the copper or copper-base alloy recovered in the electrolytic bath.

In addition, in order to continuously measure the variable concentration of copper ions in the pickling solution using a detector and make measured values fall within a prescribed value range, it is more preferable that the amount of the pickling solution supplied to the electrolytic bath, be adjusted with a supply pump and that the current applied between electrodes of an electrolyzer be adjusted to adjust the current density in the electrolytic bath, thereby automatically promoting stable electrolysis in the electrolytic bath. In this case, in order to continue more stable electrolysis, it is preferable that the optimum concentration of copper ions in the pickling solution be set to be 30 g/L to 40 g/L.

A copper or copper-base alloy is recovered using the above-described method of removing oxide film on a surface of a copper or copper-base alloy and is capable of being used as a recycled material.

The pickling solution contains the desired and optimum amounts of electrolytic solution components which are necessary when a metallic copper or metallic copper-base alloy is recovered through electrolysis. Therefore, the pickling solution containing the removed oxide film can be electrolyzed without using special means. As a result, the copper or copper-base alloy, capable of being used as a recycled material, can be efficiently recovered.

Furthermore, according to the present invention, unlike the related art, the copper or copper-base alloy, which is recovered on a cathode through electrolysis, has not a powder form but a plate-like or columnar form having high purity and appropriate hardness. Therefore, handleability is superior, rinsing is easy, and impurities can be prevented from being mixed. Accordingly, an ingot obtained by melting and casting the recovered copper or copper-base alloy as the recycled material has a lower impurity content and barely causes problems, such as cracking, during hot rolling or hot extrusion thereafter.

### Effects of the Invention

In the method of removing oxide film on a surface of a copper or copper-base alloy according to the present invention, after the copper or copper-base alloy having oxide film formed on a surface thereof is dipped in a pickling bath to remove the oxide film, a pickling solution containing the oxide film is electrolyzed in an electrolytic bath. Therefore, a high-purity copper or copper-base alloy, capable of being used as a recycled material having superior handleability, can be efficiently recovered and the electrolyzed pickling solution can be returned to the pickling bath for reuse.

### BRIEF DESCRIPTION OF THE DRAWINGS

FIG. 1 is a diagram schematically illustrating a device used in the method according to an embodiment of the present invention.
FIG 2 is a diagram schematically illustrating a device used in the method according to another embodiment of the present invention.

### DESCRIPTION OF THE PREFERRED EMBODIMENTS

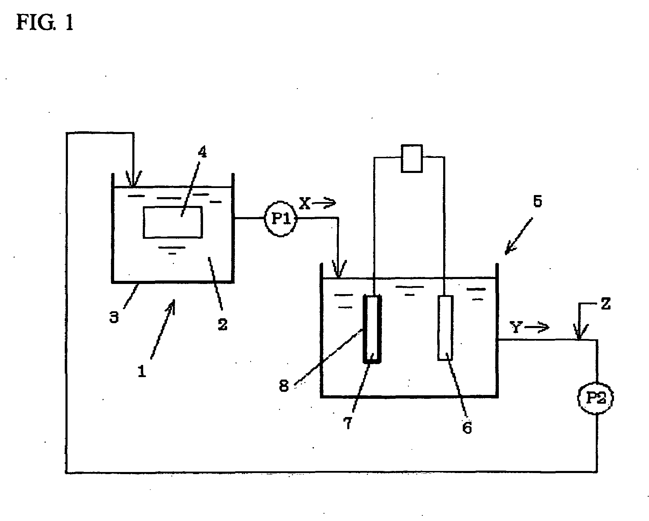

FIG. 1 is a diagram schematically illustrating a device used in the method according to an embodiment of the present invention. In an oxide film removal device 1 according to the present invention, a pickling bath 3 is filled with a pickling solution 2 for oxide film on a surface of a copper or copper-base alloy, a copper or copper-base alloy 4 is dipped in the pickling bath 3, and the oxide film on the surface is removed in the pickling solution 2. The thickness of the oxide film is 0.05 µm to 10 µm although it varies depending on heat treatment and the like in the previous step, an appropriate temperature of the pickling solution 2 for the oxide film is 30°C to 60°C, and the dipping time is preferably 30 minutes to 120 minutes. The copper or copper-base alloy 4 from which the oxide film is removed is transported from the pickling bath 3 for the next step.

The pickling solution 2 includes: 50 g/L to 400 g/L of sulfuric acid; 1 g/L to 100 g/L of at least one oxidant selected from a group consisting of nitric acid, hydrogen peroxide, peroxodisulfate ions, and iron (III) ions; 0.01 g/L to 10 g/L of at least one additive selected from a group consisting of aromatic sulfonic acid, aromatic sulfonate, alkylamine, aromatic carboxylic acid, and aromatic carboxylate; 0.005 g/L to 10 g/L of at least one surfactant selected from a group consisting of alkylbenzene sulfonic acid and alkylbenzene sulfonate, and 10 g/L to 300 g/L of copper sulfate.

When the amount of the sulfuric acid is less than 50 g/L, an effect of removing the oxide film is deteriorated, and when the amount of the sulfuric acid is greater than 400 g/L, the effect is saturated and the cost is wasted.

When the amount of at least one oxidant selected from a group consisting of nitric acid, hydrogen peroxide, peroxodisulfate ions, and iron (III) ions is less than 1 g/L, the effect of removing oxide film is deteriorated, and when the amount of the oxidant is greater than 100 g/L, the amount of gas generated during removal increases, which is disadvantageous. The generated gas is mainly NOₓ and oxygen gas generated by the oxidant used.

Even when a treatment oil, which is attached onto a surface of the copper or copper-base alloy 4 and is introduced in the previous step, contaminates the pickling solution 2, at least one additive selected from a group consisting of aromatic sulfonic acid, aromatic sulfonate, alkylamine, aromatic carboxylic acid, and aromatic carboxylate deposits a high-purity copper or copper-base alloy 8, capable of being used as a recycled material having superior handleability, on a cathode 7 during the electrolysis and prevents the reductive degradation of hydrogen peroxide on the cathode 7. In addition, the additive works as a stabilizer for the oxidant in the pickling solution 2 and thus also serves to suppress the consumption of the oxidant.

When the addition amount thereof is less than 0.01 g/L or greater than 10 g/L, the effect cannot be obtained.

Examples of the aromatic sulfonic acid as the additive include benzene sulfonic acid, toluene sulfonic acid, xylene sulfonic acid, ethyl benzene sulfonic acid, cumene sulfonic acid, phenol sulfonic acid, cresol sulfonic acid, sulfosalicylic acid, and sulfanilic acid. Examples of the alkylamine include methylamine, ethylamine, propylamine, butylamine, and pentylamine. Examples of the aromatic carboxylic acid include benzoic acid, salicylic acid, p-hydroxybenzoic acid, aminobenzoic acid, sulfobenzoic acid, and phthalic acid.

At least one surfactant selected from a group consisting of alkylbenzene sulfonic acid and alkylbenzene sulfonate is chemically stable in the pickling solution 2, lowers the surface tension of the pickling solution 2 for a long period of time to prevent dispersion of mist, and increases the osmotic strength of the pickling solution 2 to enhance pickling capability. In particular, oxygen gas is generated from the cathode 7 during the electrolysis and a large amount of sulfuric acid mist is dispersed. However, the surface tension of the pickling solution can be reduced and the dispersion of the sulfuric acid mist can be prevented by adding the additive.

When the addition amount thereof is less than 0.005 g/L or greater than 10 g/L, the above-described effect cannot be obtained.

Examples of the surfactant include octylbenzene sulfonic acid, nonylbenzene sulfonic acid, decylbenzene sulfonic acid, undecylbenzene sulfonic acid, dodecylbenzene sulfonic acid, tridecylbenzene sulfonic acid, tetradecylbenzene sulfonic acid, and mixtures thereof.

Advantageous effects of the present invention can be obtained with a combination of at least one additive selected from a group consisting of aromatic sulfonic acid, aromatic sulfonate, alkylamine, aromatic carboxylic acid, and aromatic carboxylate and at least one surfactant selected from a group consisting of alkylbenzene sulfonic acid and alkylbenzene sulfonate.

When the amount of the copper sulfate is less than 10 g/L, the efficiency of the electrolysis in the next step decreases. When the amount of the copper sulfate is greater than 300 g/L, the amount approaches saturated solubility and thus unnecessary copper sulfate is deposited in the pickling solution.

In addition, it is preferable that surface tension of the pickling solution 2 be less than or equal to 50 dyn/cm (50 × 10⁻³ N/m). The surface tension of the pickling solution 2 is adjusted to be less than or equal to 50 dyn/cm (50 × 10⁻³ N/m) mainly by at least one surfactant selected from a group consisting of alkylbenzene sulfonic acid and alkylbenzene sulfonate. As a result, a large amount of sulfuric acid mist can be efficiently prevented from being dispersed by oxygen gas which is generated from the cathode 7 during the electrolysis and the high-purity copper or copper-base alloy 8, capable of being used as the recycled material having superior handleability, can be further efficiently recovered.

Next, a pickling solution X containing the oxide film which is removed in the oxide film removal device 1 is transported to an electrolyzer 5 by a pump P1. An anode 6 and the cathode 7 are set in the electrolyzer 5 and a current is applied therebetween. As a result, the pickling solution X containing the removed oxide film is electrolyzed and the copper or copper-base alloy 8, capable of being used as a recycled material, is efficiently recovered on the cathode 7.

As the cathode 7, tough pitch copper is generally used, but it is preferable that the optimum material for the recovered copper or copper-base alloy be used. In addition, the form of the cathode is generally a thin plate shape, but is preferably a rotating cylindrical body. In the pickling solution X, for electrolysis, a concentration of copper ions is set to be 20 g/L to 60 g/L, current density is set to be 1 A/dm² to 25 A/dm², and peripheral speed of the rotating cylindrical cathode is set to be 0.08 m/s to 0.48 m/s. As a result, the efficiency of the electrolysis increases to a large degree and the size of the electrolytic bath can be reduced. If the concentration of copper ions, the current density, and the peripheral speed of the rotating cathode do not fall within the above-described range, the efficiency of the electrolysis does not increase to a large degree.

It is preferable that an iridium oxide coated titanium plate be used as the anode 6. The current density is set to be 3 A/dm² to 10 A/dm² and the electrolysis is performed for about 6 hours to 10 hours although different conditions may be set depending on the state of the oxide film. As a result, the copper or copper-base alloy 8, derived from the oxide film, is deposited on the cathode 7 in a plate shape having superior handleability.

The pickling solution 2 contains the desired and optimum amounts of electrolytic solution components which are necessary when a metallic copper or metallic copper-base alloy is recovered through electrolysis. Therefore, the pickling solution X containing the removed oxide film can be electrolyzed without using special means. As a result, the copper or copper-base alloy 8, capable of being used as the recycled material, can be efficiently recovered.

Unlike the related art, the copper or copper-base alloy 8, which is recovered on a cathode through electrolysis according to the present invention, has not a powder form but a plate-like or columnar form having high purity and appropriate hardness. Therefore, handleability is superior, rinsing is easy, and impurities can be prevented from being mixed. Accordingly, an ingot obtained by melting and casting the recovered copper or copper-base alloy 8 as the recycled material has advantageous effects in that it has a lower impurity content and barely causes problems, such as cracking, during hot rolling or hot extrusion thereafter.

Next, the amounts of the oxidant, the additive, and the surfactant consumed when the oxide film is removed during the electrolysis are determined by an analyzer, and the equivalent amounts of the oxidant, the additive, and the surfactant Z are added to an electrolyzed pickling solution Y in the electrolyzer 5. Then, the electrolyzed pickling solution Y is transported to the oxide film removal device 1 by the pump P2 and reused as a pickling solution. The amounts of the oxidant, the additive, and the surfactant Z vary depending on the amount of the attached oxide film or the kind of the copper or copper-base alloy, but are about 0.5 to 10% of the amounts before being consumed.

The above-described processes are performed in a batch treatment but may be performed in a continuous treatment. The optimum dipping time is selected according to the kind of the copper or copper-base alloy and the state of the oxide film thereof, the pickling solution 2 is circulated, and as a result, the oxide film on the surface thereof can be continuously removed.

In this case, there are many cases where the amount of the copper or copper-base alloy 4 having the oxide film formed on the surface thereof, which is to be dipped in the pickling bath 3, or the characteristics of the oxide film are uneven and different. As a result, there is a case in which the concentration of copper ions in the pickling solution 2 containing the removed oxide film does not fall within the range of 20 g/L to 60 g/L and the electrolysis is not stably performed in the electrolytic bath 5, which may adversely affect the stable recovery of the copper or copper-base alloy 8.

Therefore, when the concentration of copper ions in the pickling solution 2 is greater than 60 g/L, the recovery of the copper or copper-base alloy 8 is temporarily increased and the concentration of copper ions in the pickling solution X is adjusted to be less than or equal to 60 g/L by increasing the amount of the pickling solution X, which is supplied to the electrolytic bath 5, to increase the flow rate of the pickling solution X to the electrolytic bath and increasing a current, which is applied to the electrolytic bath 5, to increase the current density in the electrolytic bath 5. When the concentration of copper ions in the pickling solution X is less than 20 g/L, the recovery of the copper or copper-base alloy 8 is temporarily deteriorated and the concentration of copper ions in the pickling solution X is adjusted to be greater than or equal to 20 g/L by reducing the amount of the pickling solution X, which is supplied to the electrolytic bath 5, to reduce the flow rate of the pickling solution X to the electrolytic bath 5 and reducing a current, which is applied to the electrolytic bath 5, to reduce the current density in the electrolytic bath 5. Through this operation, stable electrolysis can be continuously performed in the electrolytic bath 5. In this case, when only the current density is changed, the precipitation state of the recovered copper or copper-base alloy 8 easily changes. Therefore, the flow rate is also changed at the same time to control the thickness of a diffusion layer in the pickling solution X, thereby promoting stable electrolysis without changing the precipitation state of the recovered copper or copper-base alloy 8 in the electrolytic bath 5.

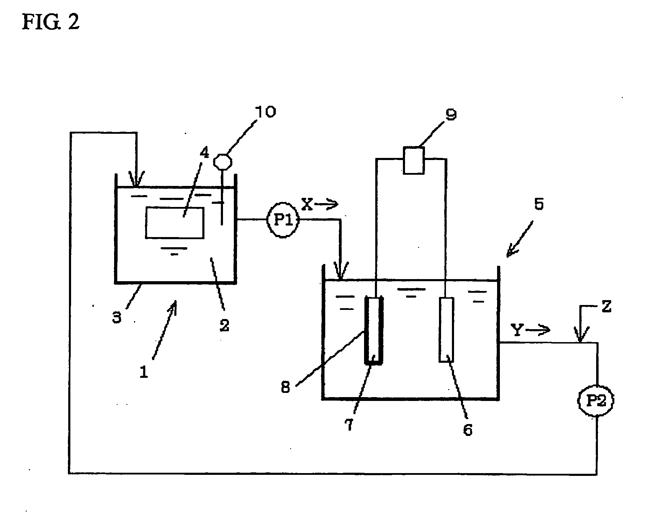

In addition, as illustrated in FIG. 2, in order to continuously measure the variable concentration of copper ions in the pickling solution 2 using a detector 10 and make measured values fall within a prescribed value range, it is more preferable that the amount of the pickling solution X supplied to the electrolytic bath 5, be adjusted (the flow rate of the pickling solution X in the electrolytic bath 5 be adjusted) with the pump P1 and that the current applied between the electrodes 6 and 7 through a rectifier 9, which are connected to a power supply (not illustrated) of the electrolyzer, be adjusted to adjust the current density in the electrolytic bath 5, thereby automatically promoting stable electrolysis in the electrolytic bath 5. In this case, in order to continue more stable electrolysis, it is preferable that the optimum prescribed value of the concentration of copper ions in the pickling solution X be set to be 30 g/L to 40 g/L.

### Examples

A plate of tough pitch copper (manufactured by Mitsubishi Materials Corporation; Cu: 99.92%, O: 300 ppm, P: 0 ppm) having a length of 500 mm, a width of 100 mm, and a thickness of 30 mm was subjected to hot rolling (600°C, roll reduction: 50%), followed by rapid cooling. As a result, a tough pitch copper plate having a thickness of 15 mm was prepared. On a surface of this tough pitch copper plate, oxide film having a thickness of about 0.7 µm was formed.

This tough pitch copper plate was dipped in a pickling bath containing 1 m³ of pickling solution having a composition and a surface tension shown in Table 1 at 40°C for 30 minutes to be pickled and remove the oxide film. Then, a surface of the tough pitch copper plate after the oxide film was removed was visually inspected.

In Table 1, A represents nitric acid, B represents hydrogen peroxide, C represents peroxodisulfate ion, D represents iron (III) ion, E represents benzene sulfonic acid, F represents sodium benzene sulfonic acid, G represents polyoxyethyleneamine, H represents dodecylbenzene sulfonic acid, I represents sodium dodecylbenzene sulfonic acid, J represents benzoic acid, and K represents sodium benzoic acid. In Table 1, when two or more kinds of compounds are added, the compounds are denoted adjacently and the concentrations thereof are denoted in the mentioned order.

The results are shown in Table 1. The results in which the oxide film on a surface of the tough pitch copper plate was completely removed and traces of gas adhesion were not observed are indicated as "good". The result in which the oxide film was not completely removed and traces of gas adhesion were observed are indicated as "bad".

For reference, when a normal mixed acid (sulfuric acid + nitric acid) was used as a pickling solution, the oxide film was not removed until dipping was continued at 40°C for 70 minutes and the traces of gas adhesion were observed to a large degree.

**[Table 1]**

| | Composition of Pickling Solution | | | | | Pickling Solution | Surface of Copper After Oxide Film Removal |
|---|---|---|---|---|---|---|---|
| | Sulfuric Acid (g/L) | Oxidant Kind (g/L) | Additive Kind (g/L) | Surfactant Kind (g/L) | Copper Sulfate (g/L) | Surface Tension (× 10⁻³ N/m) | |
| Example 1 | 50 | B(45) | G(0.09) | H(0.005) | 300 | 50 | good |
| 2 | 350 | A(100) | F,G(2,5) | 1(5) | 104 | 45 | good |
| 3 | 75 | B(60) | E(0.01) | 1(0.01) | 250 | 50 | good |
| 4 | 89 | C(30) | F(3.5) | H,I(0.3,0.5) | 73 | 60 | good |
| 5 | 255 | D(55) | G(0.05) | H(0.09) | 220 | 10 | good |
| 6 | 370 | A,C(30,30) | E,F(5,5) | H,I(0.7,5.5) | 65 | 35 | good |
| 7 | 55 | B,D(20,50) | E(8.5) | I(10) | 10 | 32 | good |
| 8 | 400 | B(1) | G,F(0.1,0.5) | H(4) | 55 | 14 | good |
| 9 | 370 | B,D(20,50) | J(4) | H,I(0.3,0.5) | 55 | 15 | good |
| 10 | 75 | A(100) | K(5) | H(0.09) | 180 | 55 | good |
| Comparative Example 1 | 450 | A(0.5) | E(11) | H(0.003) | 310 | 60 | bad |
| 2 | 40 | B(110) | G(0.008) | H(12) | 100 | 50 | bad |
| 3 | 350 | C(110) | F(0.008) | H,I(5,6) | 310 | 75 | bad |
| 4 | 45 | D(0.8) | E(12) | H(0.004) | 6 | 65 | bad |
| 5 | 420 | AC(0.2,0.2) | G(11) | I(0.004) | 8 | 65 | bad |

Next, the total amount of the pickling solution containing the removed oxide film which had the composition shown in Table 1 was poured into an electrolytic bath. By using a tough pitch copper plate as a cathode and using an iridium oxide coated titanium plate as an anode, electrolysis was performed for 8 hours under conditions of a temperature of 40°C, a current density of 5 A/dm², a distance between the electrodes of 50 mm, and a flow rate of 0.5 m/min. As a result, copper, derived from the oxide film, was deposited on the cathode in a plate shape. This plate-like copper was collected from the electrolytic bath to measure the average surface roughness Ra, the purity of copper, and the hardness of the surface. Furthermore, this plate-like copper was pickled with sulfuric acid aqueous solution, followed by melting and casting to obtain an ingot. This ingot was heated at 600°C to be molded into a bar through extrusion, and the content of sulfur (content of S) and whether there were cracks or not were visually inspected.

(1) The surface roughness Ra of the surface of the copper plate was measured using an SPM (manufactured by SII NanoTechnology Inc.).
(2) The hardness of the surface of the copper plate was measured using a MVK-G1 (manufactured by Akashi K.K.) according to Vickers hardness test (JIS Z 2244, N=3).
(3) The purity of the copper plate was measured by measuring impurities included in copper and subtracting the content of the impurities from 100%.
(4) Impurities other than C were measured using Glow Discharge Mass Spectrometry (GD-MS) and C was measured by measuring the infrared absorption of CO₂ gas, which was generated after combustion of a degreased copper sample in a high-frequency induction furnace in an oxygen atmosphere, to be converted to an amount of C.
(5) The content of S was measured by measuring the content of S in the ingot with infrared absorption spectrometry.

The results are shown in Table 2. It can be seen from these results that, in the plate-like coppers of Examples, a high purity, an appropriate hardness, and superior handleability were exhibited; there was little effect caused by S, included in the pickling solution, in the next pickling process; bars obtained by melting, casting, and extruding the plate-like coppers had a lower content of S; and there were no cracks.

**[Table 2]**

| | Characteristics of Recovered Copper Plate | | | Treatment for Extruded Bar | |
|---|---|---|---|---|---|
| | Surface Hardness (HV) | Purity of Copper (Mass%) | Surface Ra (mm) | Content of S (ppm) | Cracks |
| Example 1 | 87.6 | 99.92 | 0.16 | 10 | None |
| 2 | 85.2 | 99.92 | 1.21 | 5 | None |
| 3 | 85.3 | 99.91 | 0.55 | 7 | None |
| 4 | 80.6 | 99.92 | 2.55 | 23 | None |
| 5 | 89.3 | 99.90 | 1.45 | 8 | None |
| 6 | 84.2 | 99.91 | 1.65 | 15 | None |
| 7 | 85.7 | 99.92 | 0.87 | 12 | None |
| 8 | 85.3 | 99.91 | 1.87 | 11 | None |
| 9 | 87.2 | 99.92 | 2.32 | 12 | None |
| 10 | 85.9 | 99.91 | 1.45 | 18 | None |
| Comparative Example 1 | 66.2 | 99.80 | 3.67 | 145 | Observed |
| 2 | Non-measurable | 99.92 | 5.5 | 85 | Observed |
| 3 | 65.2 | 99.91 | Non-measurable | 42 | Observed |
| 4 | Non-measurable | 99.92 | Non-measurable | 64 | Observed |
| 5 | 69.3 | 99.81 | 6.55 | 115 | Observed |

Next, the total amount of the pickling solution containing the removed oxide film which had the composition of Example 4 was poured into an electrolytic bath. By using a rotating cylindrical tough pitch copper bar as a cathode and using an iridium oxide coated titanium plate as an anode, electrolysis was performed under conditions of a distance between the electrodes of 50 mm, a flow rate of 0.5 m/min, and a temperature of 40°C; and a concentration of copper ions, a current density and a peripheral speed of the rotating cathode shown in Table 3. A time was measured which was taken to deposit the same amount of copper on the cathode as that of a case where a tough pitch copper plate was used in the pickling solution having the above-described composition of Example 4 (where electrolysis was performed for 8 hours under conditions of a temperature of 40°C, a current density of 5 A/dm², a distance between the electrodes of 50 mm, and a flow rate of 0.5 m/min).

Furthermore, this cylindrical copper was collected from the electrolytic bath to measure the average surface roughness Ra, the purity of copper, and the hardness of the surface. Then, the cylindrical copper was pickled with sulfuric acid aqueous solution, was heated at 600°C and was molded into a bar through extrusion. In the bar, the content of sulfur (content of S) and whether there were cracks or not were visually inspected.

(1) The surface roughness Ra of the surface of the copper bar was measured using a SPM (manufactured by SII NanoTechnology Inc.).
(2) The hardness of the surface of the copper bar was measured using a MVK-G1 (manufactured by Akashi K.K.) according to Vickers hardness test (JIS Z 2244, N=3).
(3) The purity of the copper bar was measured by measuring impurities included in copper and subtracting the content of the impurities from 100%.
(4) Impurities other than C were measured using Glow Discharge Mass Spectrometry (GD-MS) and C was measured by measuring the infrared absorption of CO₂ gas, which was generated after combustion of a degreased copper sample in a high-frequency induction furnace in an oxygen atmosphere, to be converted to an amount of C.
(5) The content of S was measured with infrared absorption spectrometry.

The results are shown in Table 3. It can be seen from these results that 8 hours was required for electrolysis in the case of Example 4 where the tough pitch copper plate was used, whereas in Examples 41 to 45, 2.8 hours to 4.2 hours was required to obtain the tough pitch copper bars which have almost the same results as those of the bars obtained in the case of using the tough pitch copper plate.

**[Table 3]**

| | Electrolysis Conditions | | | | Characteristics of Recovered Copper Bar | | | Treatment for Extruded Bar | |
|---|---|---|---|---|---|---|---|---|---|
| | Concentration of Copper ions (g/L) | Current Density (A/dm²) | Peripheral Speed of Cathode (m/s) | Required Time (hr) | Surface Hardness (HV) | Purity of Copper (Mass%) | Surface Roughness Ra (mm) | Content of S (ppm) | Cracks |
| Example 41 | 20 | 5 | 0.12 | 4.2 | 80.6 | 99.90 | 2.55 | 8 | None |
| 42 | 40 | 1 | 0.35 | 3.5 | 85.3 | 99.92 | 0.88 | 15 | None |
| 43 | 60 | 20 | 0.08 | 3.8 | 87.6 | 99.91 | 1.12 | 21 | None |
| 44 | 30 | 25 | 0.22 | 2.8 | 84.1 | 99.92 | 0.16 | 17 | None |
| 45 | 50 | 15 | 0.48 | 3.2 | 83.5 | 99.91 | 1.88 | 23 | None |
| Comparative Example 41 | 70 | 30 | 0.06 | 7.8 | 80.6 | 99.92 | 0.35 | 14 | None |
| 42 | 15 | 0.8 | 0.55 | 7.9 | 84.1 | 99.90 | 2.33 | 22 | None |

Next, the electrolyzed pickling solution was analyzed to add an oxidant, an additive, and a surfactant (total amount: 0.002 g) to the pickling solution in amounts equivalent to the consumed amounts. The total amount of the pickling solution was poured again into the pickling bath to be used as a pickling solution in the next process. Oxide films of other tough pitch copper were removed in the same manner as those of Examples 1 to 8 and 41 to 45. These processes were further repeated twice. The respective results of the fourth test of removing the oxide film are shown in Table 4. Accordingly, it could be seen that the results of the fourth test were the same as those of the first test.

**[Table 4]**

| | Surface of Copper After Oxide Film Removal | Characteristics of Recovered Copper Plate or Copper Bar | | | Treatment for Extruded Bar | |
|---|---|---|---|---|---|---|
| | | Surface Hardness (HV) | Purity of Copper (Mass%) | Surface Roughness Ra(mm) | Content of S (ppm) | Cracks |
| Example 1 | good | 85.3 | 99.92 | 0.18 | 6 | None |
| 2 | good | 85.2 | 99.92 | 1.21 | 11 | None |
| 3 | good | 85.8 | 99.91 | 0.36 | 7 | None |
| 4 | good | 80.6 | 99.92 | 2.55 | 23 | None |
| 5 | good | 89.3 | 99.90 | 1.45 | 11 | None |
| 6 | good | 89.4 | 99.91 | 1.57 | 14 | None |
| 7 | good | 85.7 | 99.92 | 0.75 | 12 | None |
| 8 | good | 85.2 | 99.92 | 1.45 | 14 | None |
| 41 | good | 89.3 | 99.92 | 2.43 | 8 | None |
| 42 | good | 89.4 | 99.91 | 1.45 | 14 | None |
| 43 | good | 80.5 | 99.92 | 0.38 | 19 | None |
| 44 | good | 81.4 | 99.91 | 1.25 | 14 | None |
| 45 | good | 83.7 | 99.90 | 2.05 | 23 | None |

In addition, the pickling solution of Example 1 was circulated and oxide films of plural tough pitch copper plates were continuously and sequentially removed for 150 hours. The thickness of these tough pitch copper plates was 5 mm, and oxide films having thicknesses of about 0.4 µm to 0.9 µm were formed on surfaces thereof. During the continuous removal of the oxide films, temporarily, the maximum concentration of copper ions was 80 g/L and the minimum concentration thereof was 15 g/L in the pickling solution of the pickling bath. However, stable electrolysis was continued in the electrolytic bath and the characteristics of the recovered copper plates or copper bars are the same as those of Example 1, by setting the prescribed value of concentration of copper ions to 35 g/L and automatically adjusting the flow rate of the pump and the current, applied to the rectifier, based on values of concentration of copper ions determined by the detector.

It can be seen from these results that, when a copper or copper-base alloy, which is obtained and recovered with the method of removing oxide film on a surface of a copper or copper-base alloy according to the present invention, is used, a high-purity copper or copper-base alloy, capable of being used as a recycled material having superior handleability, can be efficiently recovered; and that the pickling solution according to the present invention can be appropriately reused in a pickling bath by adding the oxidant, the additive, and the surfactant thereto in amounts equivalent to the consumed amounts.

The present invention is not limited to the above-described embodiments, and various modifications can be made within a range not departing from the concepts of the present invention.

According to the present invention, after a copper or copper-base alloy having oxide film formed on a surface thereof is dipped in a pickling bath to remove the oxide film, a pickling solution containing the oxide film is electrolyzed in an electrolytic bath so as to recover a high-purity copper or copper-base alloy having superior handleability and to return the electrolyzed pickling solution to the pickling bath for reuse.

## Claims

1. A method of removing oxide film formed on a surface of copper or a copper-base alloy, the method comprising steps of:
dipping copper or a copper-base alloy having oxide film formed on a surface thereof, to remove the oxide film, in a pickling bath which contains a pickling solution including:
50 g/L to 400 g/L of sulfuric acid;
1 g/L to 100 g/L of at least one oxidant selected from a group consisting of nitric acid, hydrogen peroxide, peroxodisulfate ions, and iron (III) ions;
0.01 g/L to 10 g/L of at least one additive selected from a group consisting of aromatic sulfonic acid, aromatic sulfonate, alkylamine, aromatic carboxylic acid, and aromatic carboxylate;
0.005 g/L to 10 g/L of at least one surfactant selected from a group consisting of alkylbenzene sulfonic acid and alkylbenzene sulfonate; and
10 g/L to 300 g/L of copper sulfate;
electrolyzing the pickling solution containing the removed oxide film in an electrolytic bath so as to recover copper or a copper-base alloy from the oxide film;
adding the oxidant, the additive, and the surfactant to the electrolyzed pickling solution in amounts equivalent to those consumed when the oxide film is removed and when the electrolysis is performed; and
returning the electrolyzed pickling solution, to which the oxidant, the additive, and the surfactant have been added, to the pickling bath to be reused as a new pickling solution.

2. The method of removing oxide film on a surface of copper or a copper-base alloy according to Claim 1,
wherein the surface tension of the pickling solution is less than or equal to 50 × 10⁻³ N/m.

3. The method of removing oxide film on a surface of copper or a copper-base alloy according to Claim 1, further comprising steps of:
in the electrolyzing step, adjusting the concentration of copper ions in the pickling solution containing the removed oxide film to 20 g/L to 60 g/L;
controlling the current density in a range of 1 A/dm² to 25 A/dm²; and
rotating a cathode having a cylindrical body at a peripheral speed in a range of 0.08 m/s to 0.48 m/s.

4. The method of removing oxide film on a surface of copper or a copper-base alloy according to Claim 2, further comprising steps of:
in the electrolyzing step, adjusting the concentration of copper ions in the pickling solution containing the removed oxide film to 20 g/L to 60 g/L;
controlling the current density in a range of 1 A/dm² to 25 A/dm²; and
rotating a cathode having a cylindrical body at a peripheral speed in a range of 0.08 m/s to 0.48 m/s.

5. The method of removing oxide film on a surface of copper or a copper-base alloy according to Claim 3,
wherein in the electrolyzing, the flow rate of the pickling solution supplied to the electrolytic bath and the current density in the electrolytic bath are adjusted such that the concentration of copper ions in the pickling solution containing the removed oxide film is 20 g/L to 60 g/L.

6. The method of removing oxide film on a surface of copper or a copper-base alloy according to Claim 4,
wherein in the electrolyzing, the flow rate of the pickling solution supplied to the electrolytic bath is adjusted such that the concentration of copper ions in the pickling solution containing the removed oxide film is 20 g/L to 60 g/L.

## Patentansprüche

1. Verfahren zur Entfernung eines Oxidfilms, der auf der Oberfläche von Kupfer oder einer Legierung auf Kupferbasis ausgebildet ist, wobei das Verfahren die Schritte umfasst:
Eintauchen von Kupfer oder einer Legierung auf Kupferbasis mit einem auf der Oberfläche ausgebildeten Oxidfilm zur Entfernung des Oxidfilms in ein Beizbad, das eine Beizlösung enthält, welche beinhaltet:
50g/L bis 400 g/L Schwefelsäure;
1 g/L bis 100g/L mindestens eines Oxidationsmittels, das ausgewählt wird aus der aus Salpetersäure, Wasserstoffperoxid, Peroxodisulfationen und Eisen(III)-Ionen bestehenden Gruppe;
0,01g/L bis 10g/L mindestens eines Additivs, das ausgewählt wird aus der aus aromatischer Sulfonsäure, aromatischem Sulfonat, Alkylamin, aromatischer Carbonsäure und aromatischem Carboxylat bestehenden Gruppe;
0,005/L bis 10g/L mindestens eines oberflächenaktiven Mittels, das ausgewählt wird aus der aus Alkylbenzolsulfonsäure und Alkylbenzolsulfonat bestehenden Gruppe; und
10g/L bis 300g/L Kupfersulfat;
Durchführung einer Elektrolyse mit der Beizlösung, die den entfernten Oxidfilm enthält, in einem Elektrolysebad, um Kupfer oder eine Legierung auf Kupferbasis aus dem Oxidfilm zu isolieren;
Zugabe des Oxidationsmittels, des Additivs und des oberflächenaktiven Mittels zu der elektrolysierten Beizlösung in Mengen, die äquivalent sind mit denen, die bei Entfernung des Oxidfilms und Durchführung der Elektrolyse verbraucht werden; und
Zurückführen der elektrolysierten Beizlösung, zu der das Oxidationsmittel, das Additiv und der oberflächenaktive Stoff gegeben wurden, zu dem Beizbad zur Wiederverwendung als neue Beizlösung.

2. Verfahren zur Entfernung eines Oxidfilms auf der Oberfläche von Kupfer oder einer Legierung auf Kupferbasis nach Anspruch 1, wobei die Oberflächenspannung der Beizlösung geringer oder gleich ist 50 x 10⁻³ N/m.

3. Verfahren zur Entfernung eines Oxidfilms auf der Oberfläche von Kupfer oder einer Legierung auf Kupferbasis nach Anspruch 1, darüber hinaus umfassend die Schritte:
im Elektrolyseschritt Einstellen der Konzentration von Kupferionen in der Beizlösung, die den entfernten Oxidfilm enthält, auf 20g/L bis 60g/L;
Kontrolle der Stromdichte in einem Bereich von 1 A/dm² bis 25 A/dm²; und
Drehen einer Kathode mit einem zylindrischen Körper in einer Umfangsgeschwindigkeit im Bereich von 0,08 m/s bis 0,48 m/s.

4. Verfahren zur Entfernung eines Oxidfilms auf der Oberfläche von Kupfer oder einer Legierung auf Kupferbasis nach Anspruch 2, darüber hinaus umfassend die Schritte:
im Elektrolyseschritt Einstellen einer Konzentration von Kupferionen in der Beizlösung, die den entfernten Oxidfilm enthält, auf 20g/L bis 60g/L;
Kontrolle der Stromdichte in einem Bereich von 1 A/dm² bis 25 A/dm²; und
Drehen der Kathode mit einem zylindrischen Körper in einer Umfangsgeschwindigkeit im Bereich von 0,08 m/s bis 0,48 m/s.

5. Verfahren zur Entfernung eines Oxidfilms auf der Oberfläche von Kupfer oder einer Legierung auf Kupferbasis nach Anspruch 3,
wobei beim Elektrolysieren die Flussrate der Beizlösung, die dem Elektrolysebad zugeführt wird, und die Stromdichte im Elektrolysebad so eingestellt werden, dass die Konzentration von Kupferionen in der den entfernten Oxidfilm enthaltenden Beizlösung 20g/L bis 60g/L beträgt.

6. Verfahren zur Entfernung eines Oxidfilms auf der Oberfläche von Kupfer oder einer Legierung auf Kupferbasis nach Anspruch 4,
wobei bei der Elektrolyse die Flussrate der dem Elektrolysebad zugeführten Beizlösung so eingestellt wird, dass die Konzentration von Kupferionen in der den entfernten Oxidfilm enthaltenden Beizlösung 20g/L bis 60g/L beträgt.

## Revendications

1. Procédé d'élimination d'un film d'oxyde formé sur une surface de cuivre ou d'alliage de cuivre, le procédé comprenant les étapes de l'immersion de cuivre ou d'un alliage à base de cuivre ayant un film d'oxyde formé sur une de ses surfaces, pour éliminer le film d'oxyde, dans un bain de décapage qui contient une solution de décapage comprenant :
50 à 400 g/l d'acide sulfurique ;
1 à 100 g/l d'au moins un oxydant choisi parmi un groupe consistant en l'acide nitrique, le peroxyde d'hydrogène, les ions peroxodisulfate et les ions de fer (III) ;
0,01 à 10 g/l d'au moins un additif choisi parmi un groupe consistant en l'acide sulfonique aromatique, le sulfonate aromatique, une alkylamine, l'acide carboxylique aromatique et le carboxylate aromatique ;
0,005 à 10 g/l d'au moins un tensioactif choisi parmi un groupe consistant en un acide sulfonique alkylbenzène et un sulfonate d'alkylbenzène ; et
10 à 300 g/l de sulfate de cuivre ;
l'électrolyse de la solution de décapage contenant le film d'oxyde éliminé dans un bain électrolytique de manière à récupérer un cuivre ou un alliage à base de cuivre du film d'oxyde ;
l'ajout de l'oxydant, de l'additif et du tensioactif à la solution de décapage électrolysée en quantités équivalentes à celles consommées quand le film d'oxyde est éliminé et quand l'électrolyse est réalisée ; et
le retour de la solution de décapage électrolysée, à laquelle l'oxydant, l'additif et le tensioactif ont été ajoutés, au bain de décapage pour être réutilisée comme une nouvelle solution de décapage.

2. Procédé d'élimination d'un film d'oxyde formé sur une surface de cuivre ou d'alliage de cuivre selon la revendication 1,
dans lequel la tension de surface de la solution de décapage est inférieure ou égale à 50 x 10⁻³ N/m.

3. Procédé d'élimination d'un film d'oxyde formé sur une surface de cuivre ou d'alliage de cuivre selon la revendication 1, comprenant en outre les étapes de :
dans l'étape d'électrolyse, l'ajustement de la concentration d'ions de cuivre dans la solution de décapage contenant le film d'oxyde éliminé à 20 à 60 g/l ;
le contrôle de la densité de courant dans une plage de 1 à 25 A/dm² : et
la rotation d'une cathode ayant un corps cylindrique à une vitesse périphérique dans une gamme de 0,08 à 0,48 m/s.

4. Procédé d'élimination d'un film d'oxyde formé sur une surface de cuivre ou d'alliage de cuivre selon la revendication 2, comprenant en outre les étapes de :
dans l'étape d'électrolyse, l'ajustement de la concentration d'ions de cuivre dans la solution de décapage contenant le film d'oxyde éliminé à 20 à 60 g/l ;
le contrôle de la densité de courant dans une plage de 1 à 25 A/dm² ; et
la rotation d'une cathode ayant un corps cylindrique à une vitesse périphérique dans une gamme de 0,08 à 0,48 m/s.

5. Procédé d'élimination d'un film d'oxyde formé sur une surface de cuivre ou d'alliage de cuivre selon la revendication 3,
dans lequel lors de l'électrolyse, le débit de la solution de décapage approvisionnée au bain électrolytique et la densité de courant dans le bain électrolytique sont ajustés de telle manière que la concentration d'ions de cuivre dans la solution de décapage contenant le film d'oxyde éliminé est de 20 à 60 g/l.

6. Procédé d'élimination d'un film d'oxyde formé sur une surface de cuivre ou d'alliage de cuivre selon la revendication 4,
dans lequel lors de l'électrolyse, le débit de la solution de décapage approvisionnée au bain électrolytique est ajusté de telle manière que la concentration d'ions de cuivre dans la solution de décapage contenant le film d'oxyde éliminé est de 20 à 60 g/l.
